(19) Europäisches Patentamt

European Patent Office

Office européen des brevets

(11) Veröffentlichungsnummer: **0 193 248 B1**

(12) **EUROPÄISCHE PATENTSCHRIFT**

(45) Veröffentlichungstag der Patentschrift: **27.05.92**

(21) Anmeldenummer: **86200292.0**

(22) Anmeldetag: **26.02.86**

(51) Int. Cl.5: **C03C 17/00**, C03C 23/00, G02B 6/12

(54) **Verfahren zur Herstellung von Lichtwellenleiter-Strukturen.**

(30) Priorität: **01.03.85 DE 3507271**

(43) Veröffentlichungstag der Anmeldung:
**03.09.86 Patentblatt 86/36**

(45) Bekanntmachung des Hinweises auf die
Patenterteilung:
**27.05.92 Patentblatt 92/22**

(84) Benannte Vertragsstaaten:
**DE FR GB IT**

(56) Entgegenhaltungen:
**US-A- 3 809 732**
**US-A- 4 090 776**
**US-A- 4 400 052**

**PATENT ABSTRACTS OF JAPAN, Band 8, Nr. 223 (P-307)[1660], 12. Oktober 1984; & JP-A-59 104 608 (NIHON ITA GLASS K.K.) 16-06-1984**

(73) Patentinhaber: **Philips Patentverwaltung GmbH**
**Wendenstrasse 35 Postfach 10 51 49**
**W-2000 Hamburg 1(DE)**

(84) Benannte Vertragsstaaten:
**DE**

(73) Patentinhaber: **N.V. Philips' Gloeilampenfabrieken**
**Groenewoudseweg 1**
**NL-5621 BA Eindhoven(NL)**

(84) Benannte Vertragsstaaten:
**FR GB IT**

(72) Erfinder: **Bachmann, Peter, Dr.**
**Karlstrasse 55**
**W-5100 Aachen(DE)**
Erfinder: **Geittner, Peter, Dr.**
**Ronheider Weg 26**
**W-5100 Aachen(DE)**
Erfinder: **Lydtin, Hans, Dr.**
**Am Göpelschacht 9**
**W-5190 Stolberg(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**INTERNATIONAL CONFERENCE ON INTE-
GRATED OPTICS AND OPTICAL FIBER
COMMUNICATION, TECHNICAL DIGEST, Tokyo, 18.-20. Juli 1977, Seiten 113-116, JP; S.-I.
GONDA et al.: "Optical planar waveguides
fabricated by laser-irradiating molecular
beam epitaxy"**

**IBM TECHNICAL DISCLOSURE BULLETIN,
Band 23, Nr. 7A, Seiten 2999-3000, Dezember
1980, New York, US; M.J. BRADY et al.:
"Planar polymide optical waveguide"**

(74) Vertreter: **Koch, Ingo, Dr.-Ing. et al
Philips Patentverwaltung GmbH Wendenstrasse 35 Postfach 10 51 49
W-2000 Hamburg 1(DE)**

## Beschreibung

Die Erfindung betrifft ein Verfahren zur Herstellung von Lichtwellenleiter-Strukturen, bei dem ein Substrat, das zumindest in einer Oberflächenschicht ein Dotierungsmittel enthält, derart erhitzt wird, daß sich die Zusammensetzung und somit der Brechungsindex der erhitzten Substratschicht ändern.

Optische Nachrichtenübertragungssysteme enthalten neben Lichtleitfasern nach eine Vielzahl weiterer optischer Komponenten. Diese Komponenten kommen heute meist als diskrete Bauelemente zum Einsatz; sie werden dementsprechend isoliert voneinander hergestellt. Neben Halbleiterlasern als Lichtquellen und Photodetektoren als Empfänger werden für optische Übertragungsssysteme diskrete Komponenten wie z.B. Einkopplungselemente, Verzweiger, Multiplexer, Demultiplexer und Schalter auf rein optischer Basis benötigt. Als Fernziel sollten alle diese Einzelkomponenten, ähnlich wie in der Mikroelektronik, in "optischen Schaltkreisen" zusammengefaßt und auf einem einzigen Träger untergebracht werden (integrierte Optik). Da innerhalb eines Übertragungssystems eine Vielzahl optischer Komponenten vorhanden sein kann, müssen die optischen Verluste dieser Komponenten möglichst gering gehalten werden, also in der Größenordnung der Verluste des Übertragungssystems bzw. von Spleißstellen liegen, d.h. typischerweise kleiner als 0,1 dB sein.

Ein Verfahren mit dem eingangs genannten Verfahrensschritt ist aus der US-A-3 981 707 bekannt. Dabei wird ein fluorhaltiges Glassubstrat derart hoch erhitzt, daß Fluor aus dem Substrat herausdiffundiert. Dadurch bildet sich in einer Richtung senkrecht zur Substratoberfläche ein Fluor-Konzentrationsgradient (und somit ein Brechungsindexgradient) aus, der über der gesamten Oberfläche des Substrats gleichförmig und konstant ist. Es entsteht also aus dem gesamten Substrat ein flächig unstrukturierter planarer Lichtwellenleiter. Bei einer anderen Ausführungsform dieses bekannten Verfahrens wird das gesamte Substrat zu einer Gradientenindex-Lichtleitfaser weiterverarbeitet. In beiden Fällen entstehen demnach keine lokalisierten lichtleitenden Strukturen, d.h. der Aufbau integrierter optischer Komponenten ist mit diesem Verfahren nicht möglich.

Aus der US-A-4 022 602 ist es bekannt, an der Oberfläche eines undotierten lichtleitenden Substrats mit einem Laserstrahl Substratmaterial zu verdampfen, so daß Vertiefungen entstehen. Die hohe Temperatur des Laserstrahls bewirkt außerdem, daß in unmittelbarer Nähe der Vertiefungen lichtleitende Bahnen entstehen. Dieser Effekt beruht auf lokalen Änderungen der Zusammensetzung des Substratmaterials, die mit lokalen Brechungsindexänderungen einhergehen. Die Ausbildung der Vertiefungen bedeutet eine tiefgreifende Veränderung der Geometrie des Substrats, die stört, weil dann keine planaren, anschließend gut abdeckbaren Strukturen mehr vorliegen. Nachteilig ist bei diesem Vorgehen auch, daß Rauheiten der bearbeiteten Oberflächen (es werden Vertiefungen erzeugt) in der Regel zu verstärkter Streuung führen.

Aufgabe der Erfindung ist es, ein Verfahren anzugeben, das die einfache Herstellung dämpfungsarmer Lichtwellenleiter-Strukturen, insbesondere in planaren Substraten, ermöglicht.

Diese Aufgabe wird erfindungsgemäß dadurch gelöst, daß bei einem Verfahren der eingangs genannten Art die Erhitzung der Substratschicht, die das Dotierungsmittel enthält, entsprechend einem vorgewählten Muster vorgenommen wird, wobei das Dotierungsmittel entsprechend dem vorgewählten Muster aus der Substratschicht herausdiffundiert.

Durch die mustergemäße, d.h. lokale Erhitzung nach der Erfindung verarmt das Substrat an diskreten Stellen entsprechend dem vorgewählten Muster bezüglich einer (oder mehrerer) brechungsindexverändernder Dotierung(en). Dadurch wird der Brechungsindex des behandelten Substrats entsprechend dem Muster verändert, so daß eine zur Fortleitung des Lichts geeignete Struktur gebildet wird. Die erfindungsgemäße thermische Behandlung kann sowohl an einer dotierten Zone einer Lichtleitfaser-Vorform als auch an anderen geeigneten Substraten, z.B. flächigen (planaren) Substraten, vorgenommen werden.

Zur thermischen Behandlung der Substrate können Wärmequellen jeder Art herangezogen werden, z.B. Flammen, elektrische Beheizung o.ä. Besonders vorteilhaft ist wegen der Möglichkeit einer örtlich sehr gezielten thermischen Behandlung und damit verbunden der Erzeugung sehr kleiner lichtleitender Strukturen die bereits erwähnte Verwendung eines Laserstrahls zum Aufheizen des Substrats. Durch eine örtliche Verlegung des Laser-Brennflecks, Intensitätsänderung oder Änderung der Einwirkungsdauer oder auch durch den Abtransport des aus dem Substrat entfernten Dotierungsmittel können die Brechungsindexverteilung und die Geometrie der erfindungsgemäß hergestellten lichtführenden Struktur in erwünschter Weise gezielt beeinflußt werden.

Bei einer bevorzugten Ausführungsform der Erfindung wird das das Dotierungsmittel enthaltende Substrat durch Abscheidung von Schichten aus der Gasphase erzeugt. Die Abscheidung aus der Gasphase kann physikalisch (Aufdampfen) oder chemisch (CVD-Verfahren) erfolgen. Besonders vorteilhaft ist wegen der niedrigen Substrattemperatur das aus "Topics in Current Chemistry" 89 (1980) 107-131 bekannte PCVD-Verfahren.

Die Abscheidung aus der Gasphase hat den Vorteil, daß eine Kombination der Verfahrensschritte Abscheiden und Erhitzen leicht mehrmals nacheinander wiederholt werden kann. Dabei ist es möglich, aufeinanderfolgende Schichten entsprechend einzelner Muster zu erhitzen, die sich hinsichtlich Lage und/oder Form voneinander unterscheiden. Auf diese Weise ist es möglich, mehrere Lichtwellenleiter-Strukturen entweder voneinander getrennt in unterschiedlichen Ebenen innerhalb eines Substrats oder auch miteinander verbunden - d.h. dreidimensionale Lichtwellenleiter-Strukturen - herzustellen.

Die Wirkung der lokalen Erhitzung wird durch Anwesenheit einer chemisch aktiven Gasatmosphäre unterstützt. Als aktives Gas ist insbesondere Chlor geeignet.

Abschließend kann beim erfindungsgemäßen Verfahren durch ein CVD-Verfahren, insbesondere das PCVD-Verfahren, eine Deckschicht aufgebracht werden. Dies hat den Vorteil, daß insbesondere eine planare Struktur allseitig gegen äußere Einflüsse geschützt wird. Erhöhte, zum Teil auch auf Verschmutzungen zurückzuführende Zusatzdämpfungen können so vermieden werden.

Nach Anbringen der Deckschicht können die Verfahrensschritte Abscheiden und Erhitzen auf dieser Deckschicht gegebenenfalls mehrmals wiederholt werden. Anschließend kann noch eine Deckschicht angebracht werden.

Durch die erfindungsgemäße thermische Behandlung z.B. von Substraten aus homogen dotiertem $SiO_2$ lassen sich lichtleitende Strukturen mit Dämpfungen von weniger als 0,1 dB pro Komponente auf einfache Weise herstellen. Man kann solche Strukturen in einer Ebene erzeugen oder auch in mehreren Ebenen übereinander, wobei eine geeignete Positionierung des Lasers ein Verbinden mehrerer Elemente untereinander auch in der dritten Dimension erlaubt. Nimmt der Laser in jeder Ebene die gleiche Position ein, so können Strukturen erzeugt werden, deren Verhältnis von Querausdehnung zu Tiefe nicht mehr durch die Materialdiffusion bestimmt wird.

Einige Ausführungsbeispiele der Erfindung, durch die die Erfindung näher erläutert wird, sind in der Zeichnung dargestellt. Es zeigen:

Fig. 1a und 1b ein unbehandeltes Substrat und dessen Brechungsindexprofil n über die Dicke d des Substrats,

Fig. 2a und 2b ein lokal erhitztes Substrat und dessen Brechungsindexprofil,

Fig. 3 eine Wellenleiterstruktur in Form eines Verzweigers,

Fig. 4a und 4b eine eingebettete Lichtwellenleiter-Struktur und deren Brechungsindexprofil,

Fig. 5a und Fig. 5b ein weiteres unbehandeltes Substrat und dessen Brechungsindexprofil,

Fig. 6a, 6b und 6c das Substrat nach Fig. 5a und dessen Brechungsindexprofil nach lokaler Erhitzung entsprechend einem vorgewählten Muster und

Fig. 7a und 7b eine eingebettete Lichtwellenleiter-Struktur und deren Brechungsindexprofil.

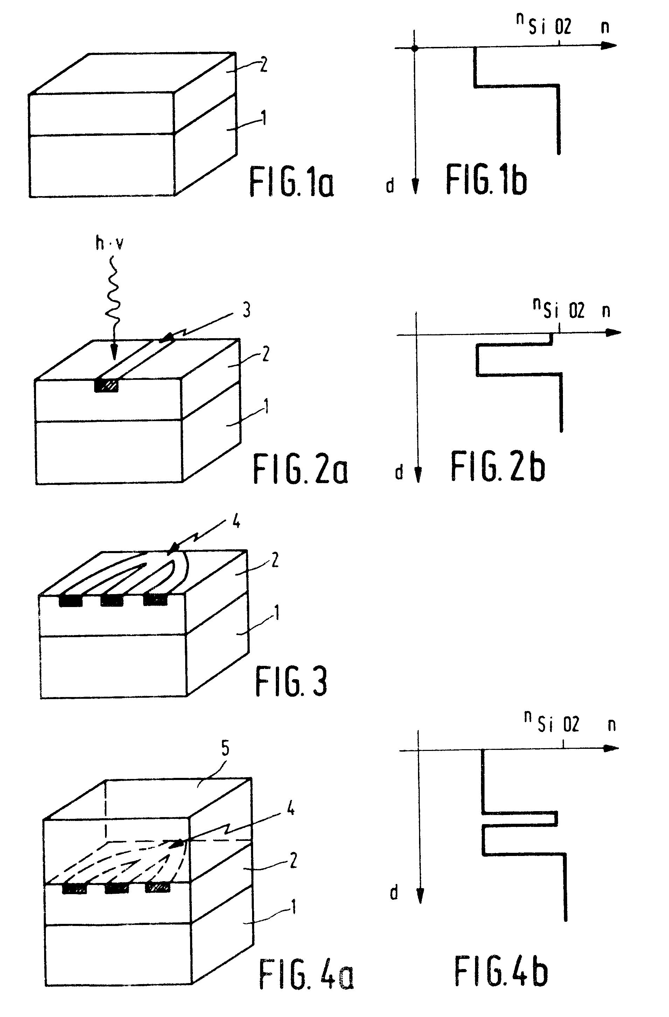

Eine homogen mit Fluor dotierte $SiO_2$-Schicht 2 wird auf einer Quarzunterlage 1 abgeschieden (Fig. 1a, b). Durch thermische Zwischen- und/oder Nachbehandlung der dotierten Schicht mit einem $CO_2$-Laserstrahl h. $\vartheta$ verarmt diese Schicht an Fluor entsprechend einem vorgewählten Muster. Dadurch erhöht sich an den mit dem Laserstrahl abgefahrenen Stellen 3 der Brechungsindex n des abgeschiedenen Materials (Fig. 2a,b). Auf diese Weise ist es möglich, optische Komponenten, z. B. Verzweiger 4, direkt in das Substrat einzubringen (Fig. 3). Ein Ätzen oder eine aufwendige Maskierung des Substrats sind nicht notwendig. Als Deckschicht bzw. Schutzschicht kann nach der thermischen Behandlung auf das fluordotierte $SiO_2$-Substrat 2 eine weitere Schicht 5 aus fluordotiertem $SiO_2$ aufgebracht und so die gesamte lichtleitende Struktur 4 in einen Festkörper eingebettet werden (Fig. 4a,b).

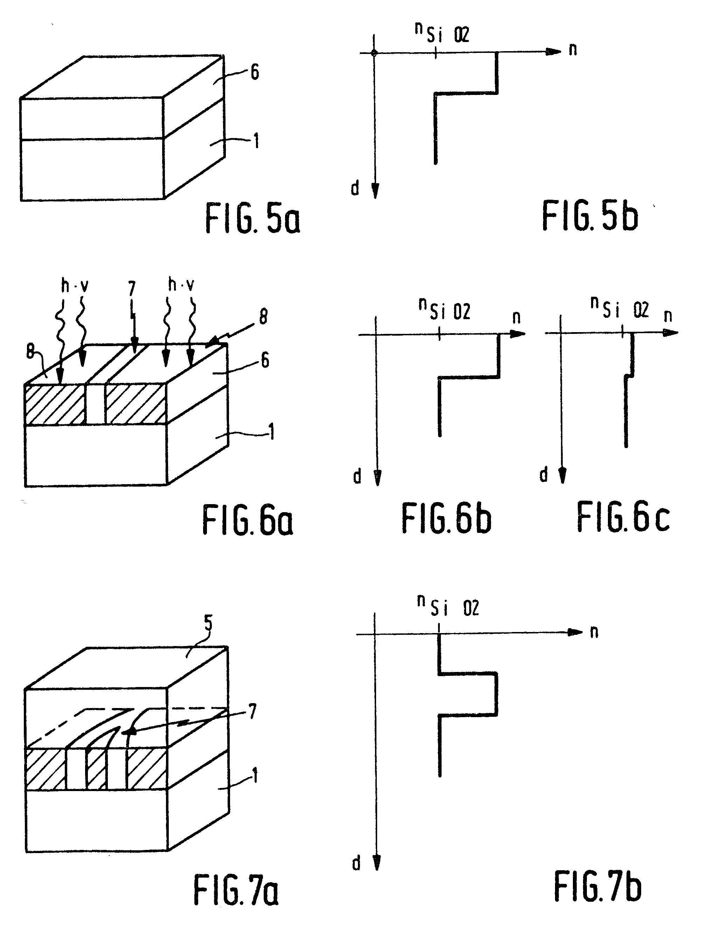

Bei $GeO_2$-dotierten $SiO_2$-Schichten wird eine ähnliche Verfahrensweise angewandt. Eine homogen mit $GeO_2$ dotierte $SiO_2$-Schicht 6 wird auf einer Quarzunterlage 1 abgeschieden (Fig. 5a,b). Die thermische Nachbehandlung betrifft jetzt nicht die eigentliche Lichtwellenleiter-Struktur 7, sondern deren unmittelbare Umgebung 8 (Fig. 6a,b,c). Dort wird selektiv $GeO_2$ entfernt, so daß der Brechungsindex des Quarzmaterials 6 sinkt. Fig. 6b zeigt das Brechungsindexprofil an einer nicht erhitzten Stelle, während Fig. 6c das Brechungsindexprofil an einer lokal erhitzten Stelle zeigt. Es bleibt auch in diesem Fall eine lichtleitende Struktur 7 zurück (Fig. 7a,b), die, wie bereits beschrieben, mit einer Deckschicht bzw.CVD-Schutzschicht 5 abgedeckt werden kann.

Herstellungsbeispiel

Eine Quarzglasplatte mit den Abmessungen 100 x 10 x 1 mm wird in eine zur Innenbeschichtung von Quarzglasrohren geeignete PCVD-Anlage gebracht und in einem Rohr mit etwa 20 mm Innendurchmesser fixiert. Das Innere des Rohres wird auf die übliche Weise mit fluordotiertem PCVD-Quarzglas beschichtet, wobei am Ort der eingebrachten Quarzglasplatte statt der Oberfläche des Rohres eine Seite der Platte mit dotiertem PCVD-Material beschichtet wird. Die Gasphase im PCVD-Reaktor setzt sich während der Abscheidung aus 590 sccm (Standard-Kubikzentimeter/Minute) Sauerstoff, 112 sccm Siliziumtetrachlorid und 1,65 sccm Hexafluorethan zusammen. Der Brechungsindex des abgeschiedenen Materials liegt bei einer Beschichtungstemperatur von 1240°C und einem Rohrinnendruck während der Beschichtung von 10 hPa etwa 0,55% unter dem Wert für undotiertes $SiO_2$. Die so beschichtete Quarzplatte wird mit dem fokussierten Strahl eines $CO_2$-Lasers entsprechend einem vorgewählten Muster so weit erhitzt, daß ein Teil der Fluordotierung an diskreten Stellen aus der Beschichtung herausdiffundiert und eine lokale Zone höheren Brechungsindexes (bis maximal 0,54% höher als der Index des fluordotierten, abgeschiedenen Quarzes) hinterläßt. Nach der Wärmebehandlung wird die Platte in der oben beschriebenen Weise erneut mit fluordotiertem Material beschichtet. Die lichtleitende Struktur wird so vollständig eingebettet.

## Patentansprüche

1. Verfahren zur Herstellung von Lichtwellenleiter-Strukturen, bei dem ein Substrat, das zumindest in einer Oberflächenschicht ein Dotierungsmittel enthält, derart erhitzt wird, daß sich die Zusammensetzung und somit der Brechungsindex der erhitzten Substratschicht ändern, dadurch gekennzeichnet, daß die Erhitzung der Substratschicht, die das Dotierungsmittel enthält, entsprechend einem vorgewählten Muster vorgenommen wird, wobei das Dotierungsmittel entsprechend dem vorgewählten Muster aus der Substratschicht herausdiffundiert.

2. Verfahren nach Anspruch 1, dadurch gekennzeichnet, daß die das Dotierungsmittel enthaltende Substratschicht entsprechend dem vorgewählten Muster mit einem Laser erhitzt wird.

3. Verfahren nach Anspruch 1, dadurch gekennzeichnet, daß die das Dotierungsmittel enthaltende Substratschicht durch Abscheidung aus einer Gasphase auf einer Trägerschicht des Substrats erzeugt wird.

4. Verfahren nach Anspruch 3, dadurch gekennzeichnet, daß die Kombination der Verfahrensschritte des Abscheidens der das Dotierungsmittel enthaltenden Substratschicht und des Erhitzens entsprechend dem vorgewählten Muster mindestens einmal wiederholt wird.

5. Verfahren nach Anspruch 4, dadurch gekennzeichnet, daß für aufeinanderfolgende Schichten unterschiedliche Muster der Erhitzung vorgewählt werden.

6. Verfahren nach Anspruch 1, dadurch gekennzeichnet, daß die Erhitzung in einer chemisch aktiven Gasatmosphäre erfolgt.

7. Verfahren nach Anspruch 1, dadurch gekennzeichnet, daß nach dem Erhitzungsschritt auf der Oberfläche der Substratschicht eine Deckschicht aufgebracht wird.

8. Verfahren nach Anspruch 7, dadurch gekennzeichnet, daß nach dem Aufbringen der Deckschicht mindestens eine weitere Schicht auf der Deckschicht aufgebracht wird, wobei die Verfahrensschritte des Abscheidens einer ein Dotierungsmittel enthaltenden Schicht und des Erhitzens einer solchen Schicht entsprechend einem vorgewählten Muster mindestens einmal wiederholt werden.

## Claims

1. A method of manufacturing optical waveguide structures, in which method a substrate comprising a dopant at least in a surface layer is heated such that a change in the composition and hence in the refractive index of the heated substrate layer is brought about, characterized in that the substrate layer comprising the dopant is heated according to a predetermined pattern to diffuse the dopant out of the substrate layer according to the predetermined pattern.

2. A method as claimed in Claim 1, characterized in that the substrate layer comprising the dopant is heated by a laser according to the predetermined pattern.

3. A method as claimed in Claim 1, characterized in that the substrate layer comprising the dopant is produced by deposition from a gas phase on a carrier layer of the substrate.

4. A method as claimed in Claim 3, characterized in that the combination of the manufacturing steps of depositing the substrate layer comprising the dopant and of heating according to the predetermined pattern is repeated at least once.

5. A method as claimed in Claim 4, characterized in that in successive layers the predetermined pattern of heating is different.

6. A method as claimed in Claim 1, characterized in that the heating is carried out in a chemically active gaseous atmosphere.

7. A method as claimed in Claim 1, characterized in that after the heating step a coating layer is applied to the surface of the substrate layer.

8. A method as claimed in Claim 7, characterized in that after providing the coating layer at least a further layer is applied to said coating layer, the manufacturing steps of depositing a layer comprising a dopant and of heating such a layer according to a predetermined pattern being repeated at least once.

**Revendications**

1. Procédé pour la fabrication de structures de guides d'ondes lumineuses, selon lequel un substrat contenant au moins un dopant dans une couche superficielle est chauffé de façon que la composition et de ce fait l'indice de réfraction de la couche de substrat chauffée changent, caractérisé en ce que le chauffage de la couche de substrat contenant le dopant s'effectue conformément à un échantillon préalablement choisi, opération lors de laquelle le dopant est chassé par diffusion de la couche de substrat conformément à l'échantillon préalablement choisi.

2. Procédé selon la revendication 1, caractérisé en ce que la couche de substrat contenant le dopant est chauffée conformément à l'échantillon préalablement choisi à l'aide d'un laser.

3. Procédé selon la revendication 1, caractérisé en ce que la couche de substrat contenant le dopant est obtenue par dépôt à partir d'une phase gazeuse sur une couche de support du substrat.

4. Procédé selon la revendication 3, caractérisé en ce que la combinaison de l'étape de procédé du dépôt de la couche de substrat contenant le dopant et du chauffage conforme à l'échantillon préalablement choisi est répétée au moins une fois.

5. Procédé selon la revendication 4, caractérisé en ce que pour des couches successives sont choisies préalablement des échantillons de chauffage différents.

6. Procédé selon la revendication 1, caractérisé en ce que le chauffage s'effectue dans une atmosphère gazeuse chimiquement active.

7. Procédé selon la revendication 1, caractérisé en ce qu'après l'étape de chauffage, une couche de recouvrement est appliquée sur la surface de la couche de substrat.

8. Procédé selon la revendication 7, caractérisé en ce qu'après l'application de la couche de recouvrement au moins une autre couche est appliquée sur la couche de recouvrement, les étapes de procédé du dépôt d'une couche contenant un dopant et du chauffage d'une telle couche correspondant à un échantillon préalablement choisi étant répétées au moins une fois.

FIG.1a

FIG.1b

FIG.2a

FIG.2b

FIG.3

FIG.4a

FIG.4b

7

FIG.5a

FIG.5b

FIG.6a

FIG.6b

FIG.6c

FIG.7a

FIG.7b